(19)

**Europäisches Patentamt**
**European Patent Office**
**Office européen des brevets**

(11) **EP 2 124 429 A1**

(12) **EUROPEAN PATENT APPLICATION**

(43) Date of publication:
**25.11.2009 Bulletin 2009/48**

(51) Int Cl.:
***H04N 1/409*** (2006.01)

(21) Application number: **08156452.8**

(22) Date of filing: **19.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
• **Mitsubishi Electric Information Technology Centre**
  **Europe B.V.**
  **Guildford, Surrey GU2 5YD (GB)**
  Designated Contracting States:
  **GB**
• **Mitsubishi Denki Kabushiki Kaisha**
  **Chiyoda-ku**
  **Tokyo, 100-8310 (JP)**
  Designated Contracting States:
  **AT BE BG CH CY CZ DE DK EE ES FI FR GR HR HU IE IS IT LI LT LU LV MC MT NL NO PL PT RO SE SI SK TR**

(72) Inventors:
• **Bober, Miroslaw**
  **Guildford, Surrey GU2 7YD (GB)**
• **Sibiryakov, Alexander**
  **Guildford, Surrey GU2 7YD (GB)**

(74) Representative: **HOFFMANN EITLE**
**Patent- und Rechtsanwälte**
**Arabellastrasse 4**
**81925 München (DE)**

(54) **Document scanner**

(57) In a document scanned, a document 10 on a document plate 12 is scanned to produce scanned image data reproducing the contents of the document. In addition, a measurement is determined for each part of the document 10 representing the distance of the document surface at that part from the image plate 12. Each determined distance is used to select a filter parameter for filtering the scanned image data of the corresponding document part to sharpen the image data. As a result, the scanned image data is filtered by the necessary amount to remove blur introduced by the distance of the document from the document plate 12. However, image data which is blurred in the original document 10 itself is faithfully reproduced because the filter parameter is selected so as not to distort this image data with unnecessary sharpening.

FIG. 4

**Description**

The present invention relates to a scanner for scanning documents such as pages of printed text, graphics, images etc.

The scanner may comprise part of a digital copying machine, a facsimile machine, or the like, or it may comprise a stand-alone system, such as a flat-bad scanner or a hand-held scanner etc., for connection to a personal computer, etc.

Many conventional document scanners, and in particular flatbed scanners, employ a contact image sensor (CIS) to generate the scanned image data. The CIS comprises a light source (usually made up of LEDs) to illuminate the document being scanned, a sensor for detecting light reflected from the document and a lens system for focussing the reflected light onto the sensor.

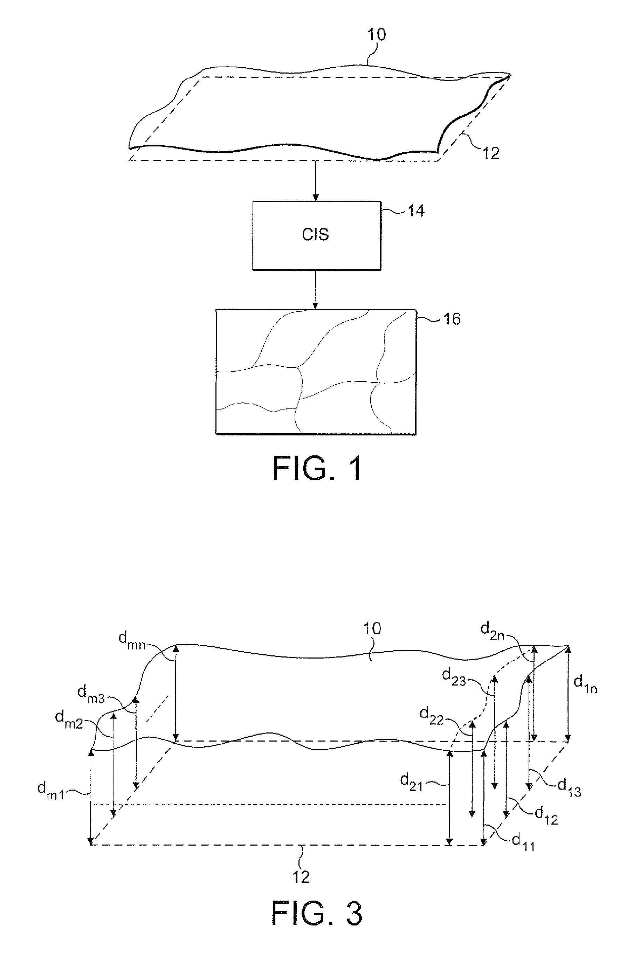

However, CIS scanners typically produce lower image quality compared to other types of scanners. In particular, the depth of field is greatly limited, which poses a problem for a document that is not perfectly flat because the scanned image data of the document becomes blurred. Thus, referring to Figure 1, when a CIS scanner 14 is used to scan a document 10 which is not perfectly flat on the glass document plate 12, the resulting image 16 contains non-uniformly blurred data.

Although this problem has been highlighted with reference to CIS scanners, the problem also occurs in other types of scanner as well, but typically to a lesser degree.

The usual way to address the problem is to filter the scanned image data with a filter to sharpen the image data and remove the blur.

However, this leads to a number of additional problems. For example, some documents, such as a page of graphics or images, contain data that is inherently blurred and it is not possible to faithfully reproduce the data of the original document in the scanned image data because the blur is removed by the filtering. Furthermore, even when blur is introduced because the document being scanned is not flat, the filtering to remove this blur can also over-sharpen non-blurred areas of the document resulting in the loss of information and/or a poor quality image.

The present invention therefore aims to address one or more of these problems.

According to the present invention, there is provided a document scanner, comprising:

means for scanning a document to produce scanned image data;

means for determining a respective measure for each of a plurality of areas of the document representative of the distance of the document surface in that area from a flat plane;

means for selecting a respective filter parameter for each of the areas of the document in dependence upon the determined distance measure for that area; and

means for processing the scanned image data to generate sharpened image data by applying to the scanned image data of each area of the document a filter with the filter parameter selected for that area.

As a result of these features, the filter parameters can be set so that each area of the scanned image data is filtered by the necessary amount to remove blur introduced by deviation of the document surface in that area from a flat plane. However, if there is no deviation of the document surface for a given area (because the document is flat in that area), then any data which is blurred in the document itself will be faithfully reproduced because the filter parameter for that area is selected so as not to distort the image data with unnecessary sharpening.

Furthermore, different filter parameters are set for different parts of the image so that the whole image is not filtered with the same filter. Therefore, the scanned image data is not over-sharpened or under-sharpened in any area.

Embodiments of the present invention will now be described with reference to the accompanying drawings, in which like reference numbers denote the same or like parts, and in which:

Figure 1 schematically shows the production of blurred scanned image data in a prior art scanner;

Figure 2 is a diagram showing the functional components of an embodiment of the present invention;

Figure 3 illustrates the document distances and depth map determined by the embodiment of Figure 2;

Figure 4 is a block diagram showing the components of the control and processing unit in Figure 2;

Figures 5a, 5b and 5c illustrate the processing performed in the embodiment of Figure 2 to determine the distance of the document being scanned from the document plate.

Figure 6 illustrates one example technique for converting a pixel measurement to a distance of the document from the document plate.

Figures 7a, 7b and 7c illustrate the processing performed to generate the data stored in the look-up table of the filter selector in Figure 4; and

Figure 8 shows an alternative arrangement for measuring the distance of the document being scanned from the document plate.

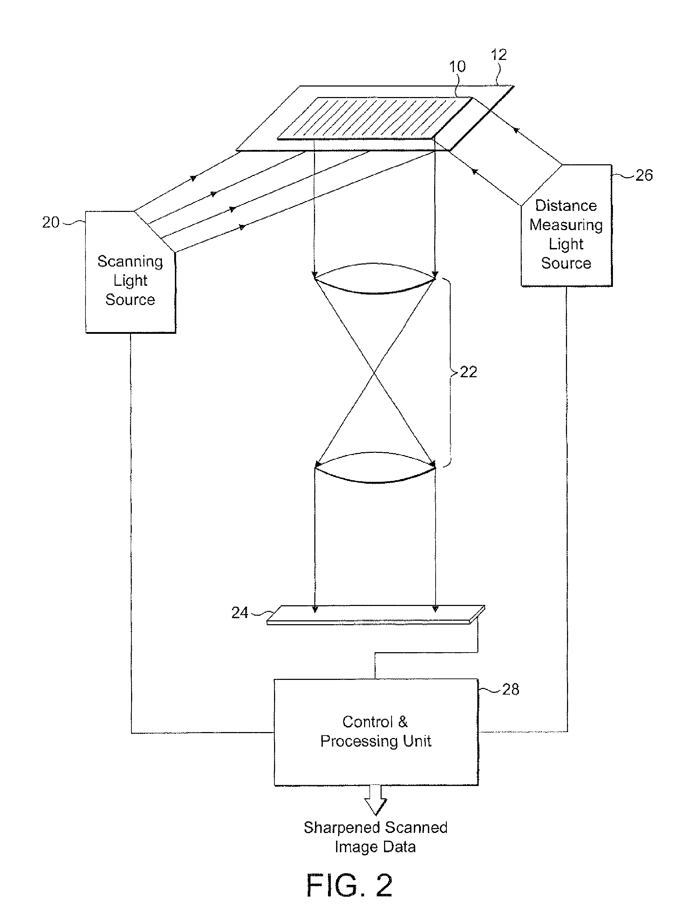

Referring to Figure 2, there is shown a diagram of the functional components of a scanner in an embodiment.

In a conventional way, the scanner comprises a transparent document plate 12 for supporting a document 10 to be scanned, as well as a scanning light source 20, a long-focus system of lenses 22 (which is schematically represented by two lenses in Figure 2 but may in practice include a more complex arrangement of multiple lenses, as would be well understood by the skilled person), and an image sensor 24.

In the present embodiment, the image sensor 24 is a line sensor comprising a single line of image sensing elements. However, the image sensor 24 may alternatively comprise multiple lines of image sensing elements.

One or both of the scanning light source 20 and image sensor 24 is movable to scan the document 10.

In addition to the conventional components described above, the scanner further comprises a distance measuring light source 26 and a control and processing unit 28, (which will be described in detail below.

The scanning light source 20, lens system 22, image sensor 24, distance measuring light source 26 and control and processing unit 28 may form part of a CIS unit within the scanner.

In operation, the control and processing unit 28 controls the distance measuring light source 26 to illuminate the document 10 with separate light from that used to generate the scanned image data. The light from the distance measuring light source 26 which is reflected from the document 10 is collected by the lens system 22 and directed to the image sensor 24. The image sensor 24 converts the detected light into electrical signals. As will be explained below, the electrical signals are then processed by the control and processing unit 28 to determine the respective distance of each of a plurality of points on the document 10 from the document plate 12.

Thus, referring to the example illustrated in Figure 3, the embodiment determines the distance d of the document 10 from the document plate 12 at each of a plurality of different points 11-mn. More particularly, in this embodiment, a respective distance for each of n points on m lines is calculated, giving a total of n x m distance measurements. The values of n and m may be set so that a respective distance is determined for each pixel of the scanned image data to be generated. Alternatively, the values of n and m may be set to generate a less dense set of measurement values (for example, a measurement value may be generated for every 10 pixels or the like).

By using the same lens system 22 and image sensor 24 as those that will be used to generate the actual scanned image data from the document 10, the result of the distance processing is a map of distance values which defines a distance of the document 10 from the plate 12 at each of a plurality of pixel positions in the scanned image data. Thus, the distance map is linked to the pixel positions of the scanned image data.

To generate the scanned image data, the control and processing unit 28 controls the scanning light source 20 to illuminate the document 10 with white light. The light reflected from document 10 is collected by the lens system 22 and directed to the image sensor 24. The image sensor 24 converts the detected light into electrical signals, which are then processed by the control and processing unit to generate scanned sharpened image data in dependence upon the determined distance measurements, as will be described in detail below.

In the present embodiment, the illumination of the document 10 with light from the distance measuring light source 26 takes place in a pre-scan before the document 10 is scanned using the scanning light source 20 to generate the scanned image data. As a result, the light used for the distance determination does not interfere with the generation of the scanned image data and, similarly, the light used to generate the scanned image data does not interfere with the distance determination.

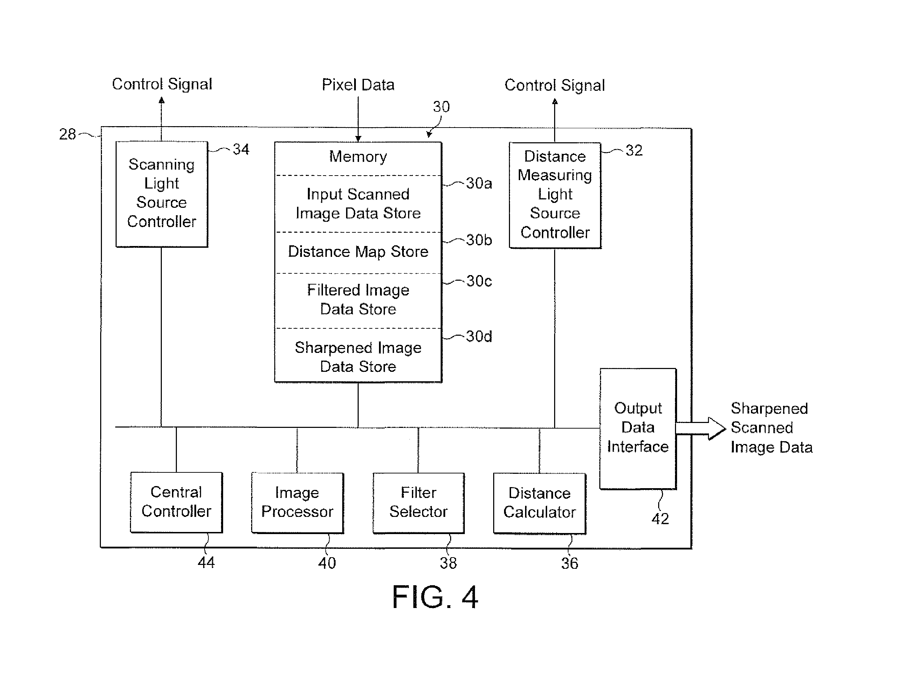

Figure 4 shows the functional components of the control and processing unit in Figure 2.

Referring to Figure 4, a memory 30 is provided for storing input data and processed data. More particularly, the memory 30 includes:

- A section 30a configured to store input scanned image data from the image sensor 24 when the document 10 is illuminated with light from the distance measuring light source 26 and also when the document 10 is illuminated with light from the scanning light source 20.

- A section 30b configured to store data defining a distance map calculated during processing.

- A section 30c configured to store filtered image data during processing.

- A section 30d configured to store sharpened image data prior to output as sharpened scanned image data.

A distance measuring light source controller 32 is arranged to control the distance measuring light source 26 to illuminate the document 10 as required during the distance determination processing.

A scanning light source controller 34 is arranged to control the scanning light source 20 to illuminate the document 10 as required to generate scanned image data to be sharpened.

Distance calculator 36 is provided to process the image data from image sensor 24 when the document 10 is illuminated with light from the distance measuring light source 26 in order to generate the distance map described previously.

Filter selector 38 is arranged to be used to process scanned image data in dependence upon the distance map generated by distance calculator 36. More particularly, in the present embodiment, the image data is filtered using a low-pass filter such as a Gaussian mask or any other form of low-pass filter, and filter selector 38 is arranged to select a respective size of the filter for each part of the image data by using the distance defined in the distance map for that part of the image to select the filter size.

In the present embodiment, filter selector 38 comprises a look-up-table (LUT) which stores data defining a filter size for each distance of the document 10 from the document plate 12. The filter selector 38 is arranged to address the look-up-table to determine the filter size to be used four a particular area of the scanned image data by using the distance from the distance map for that area as an input to the look-up-table, and then reading the stored filter size for that distance.

Image processor 40 is arranged to sharpen scanned image data generated by the image sensor 24 when the document 10 is illuminated with light from the scanning light source 20. More particularly, for each area of the scanned image data, image processor 40 performs a first step of blurring the image data by applying the low-pass filter of the size selected for that area of the image data by the filter selector 38. Next, image processor 40 processes the original image data and the blurred version so that, if a pixel is brighter than the blurred version, then it is lightened further, while if a pixel is darker than the blurred version, it is darkened. The result is to increase the contrast between each pixel and its neighbours. This process is referred to as unsharp masking (UM) and can be represented by the following expression:

$$f_s(x,y) = f(x,y) + b(f(x,y) - f_{LP}(x,y)) \qquad (1)$$

In equation (1), $f(x,y)$ is the original image data, $f_{LP}(x,y)$ is its low-pass filtered version, $f_s(x,y)$ is the result of sharpening, $(x,y)$ denotes the pixel location of the area, and b is a boosting factor that determines how much the image difference is amplified.

Thus, the original scanned image data $f(x,y)$ is modulated in dependence upon the filtered image data $f_{LP}(x,y)$ to generate sharpened image data.

Referring to equation (1) above, the size of the filter to generate $f_{LP}(x,y)$ is selected in dependence upon the distance of the document 10 at that point from the document plate 12. As a result, the size of the filter is selected so as to ensure that blurred image data which results from the fact that the document 10 is not flat on the document plate 12 is processed to sharpen the image data. On the other hand, blurred image data which is present in the document 10 itself (that is, the blurring is inherent in the original document 10 and does not result from the document 10 having a non-flat configuration) is not sharpened and instead is faithfully reproduced.

Furthermore, because a respective filter size is selected for each area of the scanned image data, it is unnecessary to determine a "one size fits all" filter for processing all of the scanned image data. As a result, the filter size can be selected for each individual area so that the blur found within this area can be processed without having a global effect which could over-sharpen or under-sharpen image data in other areas.

Output data interface 42 is arranged to output the sharpened scanned image data produced by image processor 40.

Central controller 44 is arranged to coordinate operation of the functional units shown in Figure 4.

The way in which the distance map is generated in the present embodiment will now be described.

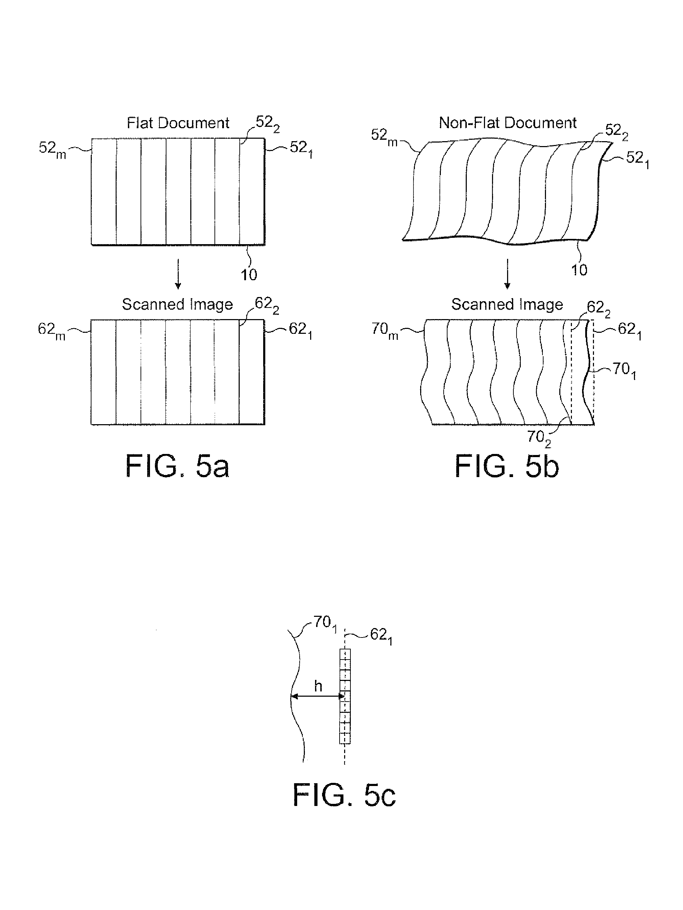

Referring to Figure 5a, distance measuring light source controller 32 controls the distance measuring light source 26 to illuminate the document 10 with lines of light $52_1$, $52_2$ ... $52_m$, in the same direction as the line of sensing elements in the image sensor 24. Each respective line of light $52_1$, $52_2$ ... $52_m$ is projected one at a time to illuminate a different respective location along the length of the document 10. More particularly, referring back to Figure 3, the document 10 is illuminated with a line of light $52_1$, $52_2$ ... $52_m$ at each position for which a row of distance measurements d are to be calculated.

As shown in the bottom half of Figure 5a, when the document 10 is flat against the document plate 12, each

illuminated line $52_1$, $52_2$ ... $52_m$ is reproduced as a straight line $62_1$, $62_2$ ... $62_m$ at a corresponding position in the scanned image data generated by image sensor 24.

However, referring to Figure 5b, when the document 10 is not flat on the document plate 12, the illumination lines $52_1$, $52_2$ ... $52_m$ are reproduced in the scanned image data as curved lines $70_1$, $70_2$ ... $70_m$ at each location at which the document is not flat. The straight dotted lines $62_1$, $62_2$ ... $62_m$ shown in Figure 5b define the theoretical positions at which the lines $70_1$, $70_2$ ... $70_m$, respectively, should lie if the document 10 was flat.

Referring now to Figures 5b and 5c, for any pixel in the scanned image data which lies on one of the theoretical straight lines $62_1$, $62_2$ ... $62_m$ at which the projected light line should lie if the document was flat, the perpendicular distance h between that theoretical straight line and the actual corresponding curved line $70_1$, $70_2$ ... $70_m$ represents the distance between the surface of the document 10 and the document plate 12 for that pixel position.

This distance h is measured for each of n pixels along each of the lines $62_1$, $62_2$ ... $62_m$. As a result, a total of m x n distance measurements h are taken.

More particularly, distance measurement light source controller 32 controls distance measuring light source 26 to project a first illumination line $52_1$ onto the document 10. The image sensor 24 is then moved to record image data for a region in which the corresponding line $70_1$ occurs in the recorded image data. In this embodiment, this is performed by moving the image sensor 24 until the line 70 has been detected by each sensor element within the image sensor 24. Thereafter, distance measuring light source controller 32 controls distance measuring light source 26 to project the second illumination line $52_2$ onto the document 10 and the image sensor 24 is moved to record image data for the region in which the corresponding line $70_2$ occurs. This processing is repeated in this way to project each of the lines up to and including the line $52_m$ and to record data for the corresponding line 70 in the scanned image data.

For each of the recorded lines $70_1$, $70_2$ ... $70_m$ in the scanned image data, the respective distance h at each of n pixel positions along the line is calculated by distance calculator 36. The number n may correspond to the total number of sensor elements in the image sensor 24, thereby generating a distance measurement h for each pixel position along the line in the scanned image data.

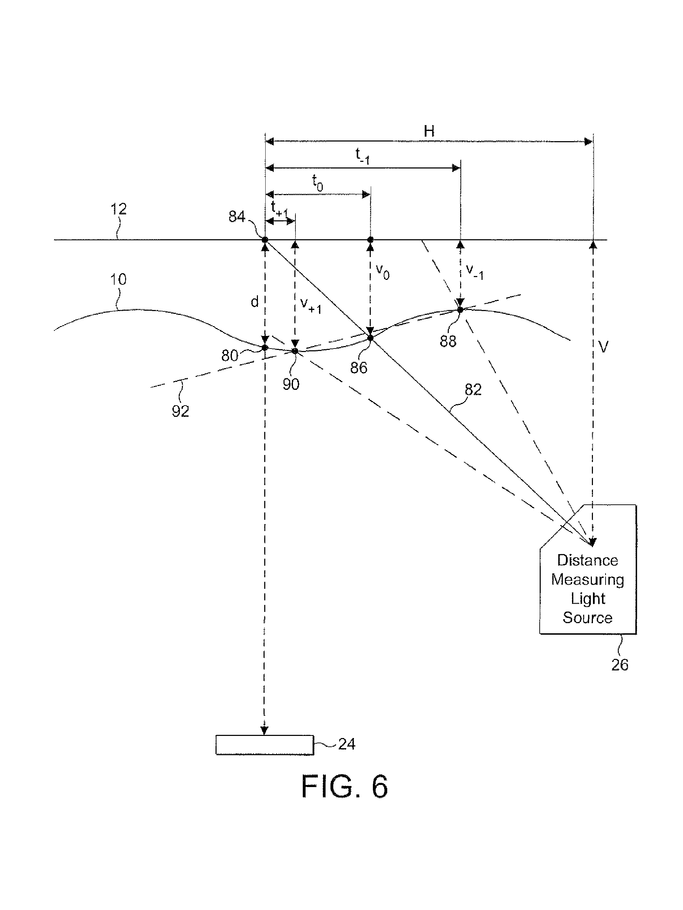

Distance calculator 36 converts each measurement h to a corresponding distance d of the document 10 from the document plate 12. This is readily achieved using the geometrical relationships of distance measuring light source 26, image sensor 24, document plate 12 and document 10. For example, referring to Figure 6, the point 80 on the document 10 is the point for which the distance d is to be measured. Distance measuring light source 26 therefore projects a line of light, indicated by ray 82, to a point 84 at which the point on the document 10 would lie if the document 10 was flat. Accordingly, the distance d to be measured is the distance between the points 80 and 84.

The distance measuring light source 26 is at a position (H, V) relative to the point 84, such that the values of H and V are known parameters of the system.

The ray 82 intersects the non-flat document surface at point 86, which has a distance $V_0$ from the document plate 12 and a distance to from the point 84. The image sensor 24 therefore senses the line reflected from point 86 on the document surface when it has travelled a distance $t_0$, with the distance $t_0$ then being recorded.

The points 88 and 90 are the points of intersection on the document surface for the previous and next rays corresponding to ray 82. The line 92 is the straight line which passes through the points 88 and 90.

To calculate the distance d, distance calculator 36 evaluates the following equations to determine d based upon linear interpolation:

$$v_0 = t_0 \frac{V}{H} \qquad \cdots\cdots\cdots\cdots\cdots\cdots\cdots (2)$$

$$d \approx v_0 + t_0 \frac{v_{+1} - v_{-1}}{(t_{+1} - t_{-1})} \qquad \cdots\cdots\cdots\cdots\cdots\cdots (3)$$

Alternatively, higher-order interpolation could be used instead of linear interpolation, as will be readily appreciated by the skilled person.

As described previously, each determined distance $d_{11}$-$d_{mn}$ is used by filter selector 38 as an input to a look-up-table to select a filter size for filtering the scanned image data at the pixel position corresponding to that of the d measurement.

The way in which the data stored in the look-up-table used by filter selector 38 will now be described. This processing is performed by way of a calibration routine for the scanner so that the look-up-table data is prestored in the scanner when it is sold.

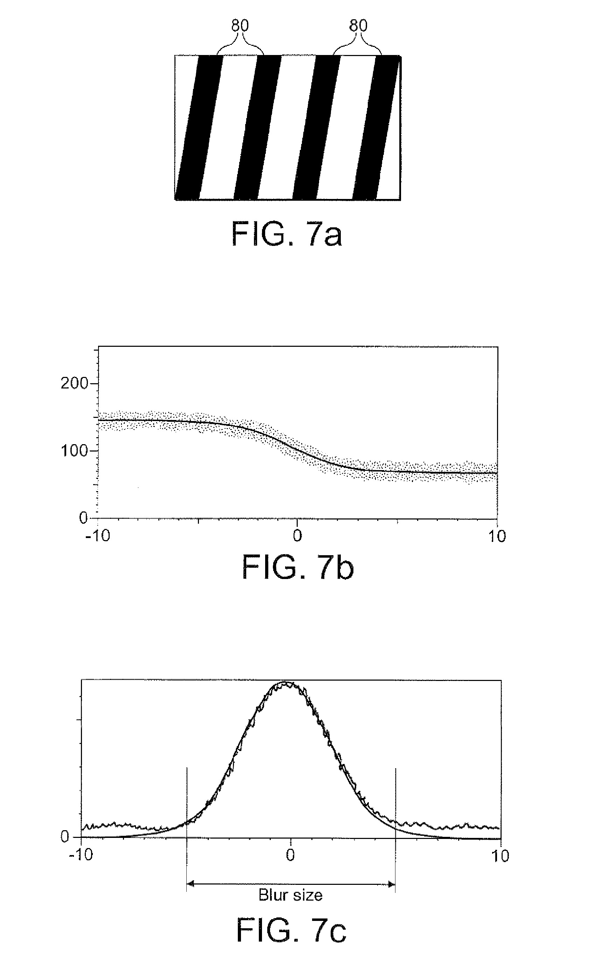

Referring to Figure 7a, a test document comprising an image of a plurality of slanted black stripes 80 is scanned a plurality of times using the scanner while the test document is maintained in a configuration parallel to the document plate 12. Each scan is performed with the test document at a different distance from the document plate 12, such as 1 mm, 2 mm, ..., up to a predetermined maximum.

Each scanned image of the test document contains slanted edges which are processed in accordance with the slanted edge technique defined by ISO standard 12333 to calculate the point spread function for the image data. As a result, a point spread function is calculated for each respective distance of the test document from the document plate 12.

As the slanted edge technique is comprehensively described in ISO standard 12333, it will not be described again in detail here. However, by way of summary, each scanned image is processed by selecting one or more slanted edges in the image, performing processing to generate an edge profile, such as that illustrated by way of example in Figure 7b, differentiating the edge profile to obtain a non-parametric point spread function, for example as illustrated in Figure 7c.

The present embodiment fits a model function (such as a Gaussian curve) to the point spread function. Furthermore, the embodiments defines a blur size representing the effect of the distance d of the test document from the document plate 12 by selecting the region of the fitted model function for which the values are greater than a predetermined percentage of the maximum value (which may be, for example, 10%) as shown in Figure 7c.

Based upon this blur size, a filter size is determined for processing the image data to remove this quantity of blur. It will be readily appreciated by the skilled person that the filter size will be dependent upon the type of the filter used. However, knowing the type of filter to be used in the scanner, tests can be carried out to process image data having the measured amount of blur to determine empirically the optimum filter size to remove that blur.

The selected filter size for each distance d is then stored in the look-up-table of the filter selector 38.

Many modifications and variations can be made to the embodiment described above.

For example, in the embodiment described above, image processor 40 applies a low-pass filter to the scanned image data in accordance with equation (1) above. However, alternatively, image processor 40 may apply a high-pass filter $f_{HP}(x,y)$ in accordance with the expression:

$$f_s(x,y) = f(x,y) + b \times f_{HP}(x,y) \qquad (4)$$

By way of a further alternative, image processor 40 may filter the image data using the technique described in our co-pending patent applications entitled "Image Processing to Enhance Image Sharpness" (attorney references 127 707 and 127 752) filed concurrently herewith, the entire contents of which are incorporated herein by cross-reference.

In the embodiment described above, filter selector 38 selects a respective filter size in dependence upon each distance measurement d in the distance map calculated by distance calculator 36. This size may be the size of the filter kernel (that is, the number of pixels in the sliding window of the filter) or it may be the frequency response of the filter (that is, the variance in the case of a Gaussian filter, etc.) or it may be a combination of these two sizes.

Furthermore, in addition to, or instead of, selecting filter size, filter selector 38 can select any one or more other filter parameters relevant to removing blur from the scanned image data, such as the filter gain.

In the embodiment described above, the illumination of the document 10 by distance measuring light source 26 is performed in a pre-scan prior to illumination of the document 10 by the scanning light source 20. However, instead, the illumination by the distance measuring light source 26 may be performed in a post-scan after the illumination by the scanning light source 20.

Alternatively, the illumination by the two light sources 26 and 20 may be performed alternately on a line-by-line basis along the length of the document (that is, a line on the document 10 is illuminated first by one of the light sources, and then by the other of the light sources, before the processing is repeated for the next line in the document).

In the embodiment described above, the distance measuring light source 26 is a separate light source from the scanning light source 20. However, a single light source may be used as both the distance measuring light source and the scanning light source. In this case, the single light source would need to be operated at two respective times so as to provide separate illumination of the document 10 for the purpose of distance measurement and separate illumination of the document 10 for the purpose of generating scanned image data. In this way, the illumination for distance measurement does not interfere with the generation of the scanned image data, and the illumination of the document 10 for the generation of the scanned image data does not interfere with the distance calculation.

In the embodiment described above, distance measuring light source 26 illuminates the document 10 with straight illumination lines of light $52_1$, $52_2$ ... $52_m$. This has the advantage that the corresponding theoretical lines $62_1$,

$62_2 ... 62_m$ in the scanned image data align with the sensing elements of the image sensor 24. However, it is not essential that distance measuring light source 26 illuminates the document 10 with straight lines, and instead lines of any shape may be used. This is possible because the corresponding lines in the scanned image data can easily be measured by illuminating a flat document on the document plate 12 and determining the positions of the lines in the scanned image data. Deviations of those lines caused by non-flat documents can then be measured in the way described previously.

In the embodiment described above, each of the lines $70_1$, $70_2 ... 70_m$ produced in the scanned image data by a non-flat document are recorded by moving the image sensor 24 from the theoretical position of the line (that is, $62_1$, $62_2 ... $ or $62_m$) until each sensing element on the image sensor 24 has detected the line 70. However, as an alternative, the image sensor 24 may be moved a predetermined number of pixel positions corresponding to the expected maximum deviation of the curved line 70 from the corresponding straight line 62.

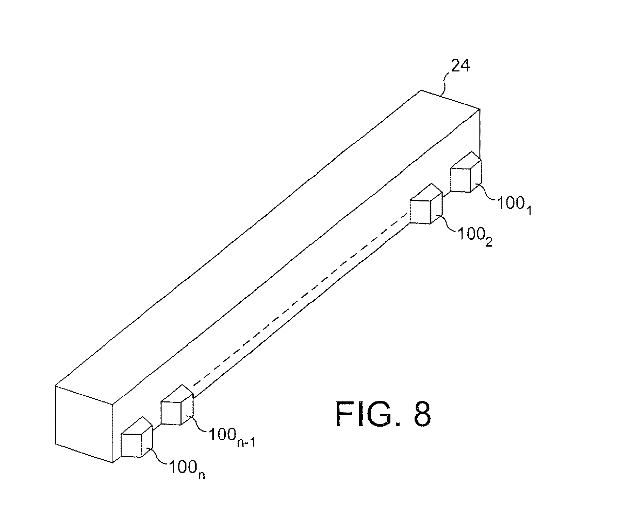

In the embodiment described above, the distance of each part of the document 10 from the document plate 12 is calculated by illuminating the document 10 with lines of light from distance measuring light source 26 and processing the resulting image data recorded by image sensor 24 to determine the deviation of the line in the image data from the expected theoretical position. However, the distance of each part of document 10 from the document plate 12 may be measured in many different ways by illuminating the document 10 with electromagnetic radiation which is different to that from the scanning light source 20 which is used to generate the scanned image data. For example, referring to Figure 8, a plurality of LEDs $100_1$, $100_2 ... 100_m$ may be provided along the length of the image sensor 24 in place of the distance measuring light source 26. The LEDs $100_1$, $100_2 ... 100_m$ are arranged to illuminate the document 10 with light sources and a circuit is provided for firing the LEDs and measuring the time of flight of the light pulses to the surface of the document 10 and back to the image sensor 24 using a technique such as that described for example in US 6,043,868. By way of further example, the distance of each part of the document 10 from the document plate 12 may be measured by illuminating the document with electromagnetic radiation of other wavelengths, such as infrared, ultra violet, etc., or by illuminating the document with ultrasound.

In the embodiment described above, the depth map values d generated by distance calculator 36 could be filtered to obtain a noise-free depth map for use by the filter selector 38.

In the embodiment described above, the distance d of the document 10 from the document plate 12 is calculated by distance calculator 36. The document plate 12 represents the optimum position of the document 10 for generation of the scanned image data by image sensor 24 taking into account the light focusing by lens system 22. However, instead, the distance of the document 10 from any other predetermined plane representative of the optimum imaging plane may be determined. For example, the distance of the document 10 from the plane of the image sensor 24 may be determined.

Other modifications and variations are, of course, possible. Accordingly, the present invention is not limited to the embodiments described above.

**Claims**

1.   Apparatus for scanning a document to generate scanned image data, the apparatus comprising:

   a light source (20) for illuminating a document (10) to be scanned;
   a light sensor (24) for detecting light reflected from the document and for converting the detected light into electrical signals;
   a processing unit (40) for processing the signals from the light sensor to generate scanned image data;
   means (26, 32, 36) for determining a respective distance of each of a plurality of parts of the document (10) from a predetermined plane;
   means (38) for selecting a filter parameter for each of the plurality of parts of the document in dependence upon the determined distances of the part from the predetermined plane;
   means (40) for filtering the scanned image data for each part of the document (10) by applying a filter with the selected filter parameter to the scanned image data to generate filtered image data; and
   means (40) for modulating the scanned image data in dependence upon the filtered image data to generate sharpened image data.

2.   Apparatus according to Claim 1, wherein the means (26, 32, 36) for determining the respective distance of each of the plurality of parts of the document (10) from the predetermined plane comprises means (26) for illuminating the document with electromagnetic radiation which is separate from the illumination used to generate scanned image data.

3.   Apparatus according to Claim 2, wherein the light sensor (24) is arranged to detect both the light reflected from the document (10) for generating scanned image data and the electromagnetic radiation reflected from the document (10) for measuring the distances.

4. Apparatus according to Claim 2 or Claim 3, wherein the light source (20) and the means (26) for illuminating the document (10) with electromagnetic radiation comprise a single light source.

5. Apparatus according to any of Claims 1 to 4, wherein the means (26, 32, 36) for determining the respective distance of each of the plurality of parts of the document (10) from the predetermined plane is arranged to:

   illuminate the document (10) with a plurality of lines ($52_1$ ... $52_m$) of electromagnetic radiation;
   detect the reflected lines ($70_1$ ... $70_m$) of electromagnetic radiation from the document; and
   determine the distances in dependence upon the deviation of the reflected lines ($70_1$ ... $70_m$) from lines ($62_1$ ... $62_m$) corresponding to those produced by a flat document.

6. Apparatus according to Claim 1, wherein the means for determining the respective distance of each of the plurality of parts of the document (10) from the predetermined plane is operable to determine the distances using ultrasound.

7. Apparatus according to any preceding claim, wherein:

   the apparatus further comprises a document plate (12) for supporting a document (10) to be scanned; and
   the means (26, 32, 36) for determining the respective distance of each of the plurality of parts of the document (10) from the predetermined plane is arranged to determine the distances from the plane of the document plate (12).

8. A method of scanning a document to generate scanned image data, the method comprising:

   illuminating a document (10) to be scanned with light;
   detecting light reflected from the document and converting the detected light into electrical signals;
   processing the electrical signals to generate scanned image data;
   determining a respective distance of each of a plurality of parts of the document (10) from a predetermined plane;
   selecting a filter parameter for each of the plurality of parts of the document in dependence upon the determined distance of the part from the predetermined plane;
   filtering the scanned image data for each part of the document (10) by applying a filter with the selected filter parameter to the scanned image data to generate filtered image data; and
   modulating the scanned image data in dependence upon the filtered image data to generate sharpened image data.

9. A method according to Claim 8, wherein the step of determining the respective distance of each of the plurality of parts of the document (10) from the predetermined plane comprises illuminating the document with electromagnetic radiation which is separate from the illumination used to generate scanned image data.

10. A method according to Claim 9, wherein a single light sensor (24) is arranged to detect both the light reflected from the document (10) for generating scanned image data and the electromagnetic radiation reflected from the document (10) for measuring the distances.

11. A method according to Claim 9 or Claim 10, wherein a single light source (20) is used to illuminate the document (10) to generate the scanned image data and to illuminate the document (10) with electromagnetic radiation to determine the distances.

12. A method according to any of Claims 8 to 11, wherein the step of determining the respective distance of each of the plurality of parts of the document (10) from the predetermined plane is performed by:

   illuminating the document (10) with a plurality of lines ($52_1$ ... $52_m$) of electromagnetic radiation;
   detecting the reflected lines ($70_1$ ... $70_m$) of electromagnetic radiation from the document; and
   determining the distances in dependence upon the deviation of the reflected lines ($70_1$ ... $70_m$) from lines ($62_1$ ... $62_m$) corresponding to those produced by a flat document.

13. A method according to Claim 8, wherein the step of determining the respective distance of each of the plurality of parts of the document (10) from the predetermined plane is performed using ultrasound.

14. A method according to any of Claims 8 to 13, wherein the step of determining the respective distance of each of the plurality of parts of the document (10) from the predetermined plane determines the distances from the plane of a document plate (12) which supports the document (10).

FIG. 1

FIG. 3

FIG. 2

Control Signal        Pixel Data        Control Signal

28 ~

Scanning
Light
Source
Controller ~ 34

Memory

— 30

Input Scanned
Image Data Store ~ 30a

Distance Map Store ~ 30b

Filtered Image
Data Store ~ 30c

Sharpened Image
Data Store ~ 30d

Distance
Measuring
Light
Source
Controller ~ 32

Output
Data
Interface

Sharpened
Scanned
Image Data

42

Central
Controller

Image
Processor

Filter
Selector

Distance
Calculator

44        40        38        36

# FIG. 4

EP 2 124 429 A1

FIG. 5a

FIG. 5b

FIG. 5c

FIG. 6

80          80

FIG. 7a

FIG. 7b

Blur size

FIG. 7c

FIG. 8

**European Patent Office**

**EUROPEAN SEARCH REPORT**

Application Number

EP 08 15 6452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/206235 A1 (IKENO TAKAHIRO [JP]) 6 September 2007 (2007-09-06) * paragraphs [0006], [0007]; figure 5 * * paragraph [0040]; figure 3 * * paragraphs [0051] - [0057]; figures 9,10 * * paragraph [0069]; figure 13 * | 1-14 | INV. H04N1/409 |
| Y | | 5,12 | |
| X | US 5 276 530 A (SIEGEL ROBERT P [US]) 4 January 1994 (1994-01-04) * column 2, line 60 - column 4, line 42; figures 1-3 * * column 6, line 36 - line 58 * | 1-14 | |
| X | US 5 726 775 A (WALSH JOHN F [US]) 10 March 1998 (1998-03-10) * column 2, line 46 - line 67 * * column 6, line 23 - line 60; figures 1-3 * | 1-14 | |
| Y | US 5 585 926 A (FUJII SHINICHI [JP] ET AL) 17 December 1996 (1996-12-17) * column 15, line 21 - column 18, line 61; figures 43-50 * | 5,12 | TECHNICAL FIELDS SEARCHED (IPC)<br><br>H04N |
| A | ROBINSON D C: "ADJUSTABLE EDGE ENHANCEMENT USING A LIBRARY OF FILTERS" XEROX DISCLOSURE JOURNAL, XEROX CORPORATION. STAMFORD, CONN, US, vol. 20, no. 5, 1 September 1995 (1995-09-01), page 471/472, XP000555732 * the whole document * | | |

The present search report has been drawn up for all claims

| Place of search | Date of completion of the search | Examiner |
|---|---|---|
| Munich | 12 September 2008 | Bakstein, Hynek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 15 6452

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2008

| Patent document cited in search report | | Publication date | Patent family member(s) | | Publication date |
|---|---|---|---|---|---|
| US 2007206235 | A1 | 06-09-2007 | JP | 2007243348 A | 20-09-2007 |
| US 5276530 | A | 04-01-1994 | NONE | | |
| US 5726775 | A | 10-03-1998 | CA | 2202197 A1 | 26-12-1997 |
| | | | JP | 10084461 A | 31-03-1998 |
| US 5585926 | A | 17-12-1996 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6043868 A